# EUROPÄISCHE PATENTSCHRIFT

(11) **EP 3 834 597 B1**
(45) Veröffentlichungstag und Bekanntmachung des Hinweises auf die Patenterteilung: **27.12.2023**
(21) Anmeldenummer: 20401065.6
(22) Anmeldetag: 03.12.2020
(51) Int. Cl.: A01C 17/00, E01C 19/20, E01H 10/00, E01C 19/17

(54) **SCHLEUDERSTREUER**
CENTRIFUGAL SPREADER
ÉPANDEUR CENTRIFUGE

(30) Priorität: 13.12.2019 DE 102019134240
(43) Veröffentlichungstag der Anmeldung: 16.06.2021
(73) Patentinhaber: Amazonen-Werke H. Dreyer SE & Co. KG, 49205 Hasbergen (DE)
(72) Erfinder: Lampert, Tobias, 49545 Tecklenburg (DE); Probst, Sergej, 49090 Osnabrück (DE); Picker, Daniel, 49186 Bad Iburg (DE)

(56) Entgegenhaltungen:
- EP-A1- 1 293 114
- EP-A1- 3 017 674
- EP-A1- 3 165 072
- DE-A1-102016 114 420
- DE-A1-102017 000 022
- DE-U1-202014 010 611
- US-A- 4 277 022
- US-A1- 2004 124 260

## Beschreibung

Die Erfindung betrifft einen Schleuderstreuer gemäß dem Oberbegriff des Patentanspruches 1 und ein Verfahren zum Erfassen eines Gutstroms innerhalb eines Schleuderstreuers gemäß dem Oberbegriff des Patentanspruches 11.

In einer Vielzahl von Anwendungsfällen, insbesondere in der Landwirtschaft und/oder im Kommunal- und/oder Winterdienst, werden Schleuderstreuer zum Ausbringen von Material, insbesondere Streugut und/oder Sole, auf einer Fläche und/oder Fahrbahn eingesetzt. Derartige Schleuderstreuer umfassen zum Bevorraten und/oder Fördern des Materials zumindest einen Vorratsbehälter, eine Dosiereinrichtung, insbesondere ein Transportband, und eine Ausbringeinrichtung, insbesondere eine Streuscheibe. Die Schleuderstreuer sind hierbei dazu eingerichtet, dass im Vorratsbehälter bevorratete Material auf einer Fläche und/oder Fahrbahn, insbesondere in Form eines von der Streuscheibe ausgehenden Streufächers, zu verteilen. Gattungsgemäße Schleuderstreuer sind von einem Zugfahrzeug ziehbar und/oder an einem Zugfahrzeug anbaubar ausgebildet.

Darüber hinaus umfassen Schleuderstreuer typischerweise zumindest einen Sensor der dazu eingerichtet ist, dass über die Streuscheibe ausbringbare Material zu erfassen. Neben der Überwachung der Ausbringmenge und/oder Abwurftrajektorie des auszubringenden Materials ist hierüber außerdem eine indirekte Blockaden- und/oder Verstopfungserkennung realisierbar. Ein zumindest teilweise nicht vorhandener Streufächer, der mittels des zumindest einen Sensors erfassbar ist, kann hierbei auf eine zumindest teilweise Blockade und/oder Vorstopfung des Materials, insbesondere in einer Förderrichtung, vor der Streuscheibe hindeuten. Somit soll insbesondere verhindert werden, dass ein Bediener während eines Ausbringvorgangs eine Fahrtstrecke über der Fläche und/oder der Fahrbahn abfährt, ohne dabei Material zu verteilen.

Ein derartiger Schleuderstreuer ist in der DE 10 2016 114 420 A1 beschrieben. Dieser umfasst neben einem Vorratsbehälter zumindest eine Dosiereinrichtung die dem Vorratsbehälter zugeordnet ist und über die das Material in einstellbaren Mengen einer rotatorisch antreibbaren Streuscheibe zuführbar ist. Darüber hinaus umfasst der Schleuderstreuer zumindest einen berührungsfreien Sensor, insbesondere Radarsensoren, der dazu eingerichtet ist, zumindest ein erstes Messsignal zu erzeugen und auf das auszubringende Material zumindest teilweise zu emittieren. Ein vom Material zumindest teilweise reflektiertes Messsignal ist zur Erfassung des Materials vom Sensor zumindest teilweise als zweites Messsignal empfangbar.

Nachteilig an diesem Aufbau ist unter anderem, dass hierbei in erster Linie der von der Streuscheibe ausbringbare Streufächer von dem zumindest einen Sensor überwachbar ist. Somit ist der Abstand zwischen der Messstelle des Sensors und einer möglichen Blockadestelle des auszubringenden Materials, insbesondere in Förderrichtung vor der Streuscheibe, besonders groß ausgebildet. Darüber hinaus ist das Sensorsignal bei einer solchen Anordnung zumindest teilweise von äußeren Einflüssen und/oder der Umgebung beeinflussbar, womit ein beeinträchtigtes Messsignal, insbesondere in Form von Radarechos, vom Sensor erfassbar ist und dies somit zu einem zumindest teilweise beeinträchtigten Messergebnis führen kann.

Ferner ist aus der Druckschrift DE 20 2014 010 611 U1 ein Schleuderstreuer bekannt, bei dem zumindest ein Aufgabeorgan zwischen der Dosiereinrichtung und der Streuscheibe angeordnet ist, über welches das von der Dosiereinrichtung zugeführte Material in Form eines zumindest teilweise fließenden Gutstroms auf der Streuscheibe aufbringbar ist. Der zumindest eine Sensor ist hierbei im Bereich des zumindest einen Aufgabeorganes, zwischen der Dosiereinrichtung und der Streuscheibe, angeordnet.

Ein derartig ausgeführter Schleuderstreuer hat den Nachteil, dass nur eine Art und/oder Sorte von Material im Bereich des zumindest einen Aufgabeorgans hinsichtlich einer Ausbringmenge, Blockade und/oder Verstopfung überwachbar ist. Es ist hierbei insbesondere nicht möglich mehrere gleichzeitig auszubringende Materialien mittels des zumindest einen Sensors gemeinsam zu erfassen und/oder zu überwachen.

Die der Erfindung zugrunde liegende Aufgabe besteht somit darin, einen Schleuderstreuer so zu gestalten, dass die Erfassungsleistung des zumindest einen Sensors verbessert und die Blockaden- und/oder Verstopfungserkennung besonders betriebssicher und einfach ist.

Diese Aufgabe wird erfindungsgemäß durch die kennzeichnenden Merkmale des Anspruch 1 gelöst.

Infolge dieser Anordnung ist das Material im Bereich des Aufgabeorgans, stark konzentriert mit besonders geringer Ausdehnung, insbesondere im Wesentlichen quer zu einer Richtung der Materialförderung, förderbar. Die Förderung des wenigstens einen Materials ist hierbei bevorzugt zumindest teilweise frei fallend und/oder zumindest teilweise rutschend auf und/oder durch das zumindest eine Aufgabeorgan realisierbar. Der Sensor ist derartig angeordnet, dass das Blickfeld des Sensors im Wesentlichen senkrecht und/oder in Richtung der Materialförderung ausgerichtet ist. Somit ist erreicht, dass ein Blickfeld und/oder Messbereich des zumindest einen Sensors besonders einfach auf den Gutstrom einstellbar und der Gutstrom so besonders einfach erfassbar ist. Mittels der vom Sensor emittierbaren und/oder empfangbaren Messsignale ist somit außerdem feststellbar, in wie weit eine zumindest teilweise Beeinträchtigung des Gutstroms, insbesondere innerhalb eines zeitlichen Abstandes, vorliegt. Eine Auswertung der Messsignale ist bevorzugt mittels wenigstens einer dem Schleuderstreuer zugeordneten Steuerungs- und/oder Regelungseinrichtung, insbesondere einer elektronischen Auswerteeinheit, ausführbar. Ein vom Sensor und/oder der Steuerungs- und/oder Regelungseinrichtung detektierbarer zumindest teilweise nicht vorhandener Gutstrom ist, vorzugsweise mittels eines dem Schleuderstreuer und/oder dem Zugfahrzeug zugeordneten Ausgabemittels, an einen Bediener optisch und/oder akustisch signalisierbar.

Darüber hinaus ist über zumindest einen im Bereich des Aufgabeorgans angeordneten Sensor erreichbar, dass relativ zum Sensor bewegliche Geometrien, insbesondere Flächen, aus der Umgebung nicht in den Sensor und/oder das Sensorblickfeld und/oder den Messbereich des Sensors ragen und somit den Sensor beschädigen und/oder das Messsignal zumindest teilweise beeinflussen können. Diese Art der Anordnung erfordert somit lediglich nur eine mit geringem Aufwand realisierbare und/oder bevorzugt keine zusätzliche Abschirmung und/oder Abdeckung des Sensors, insbesondere des Sensorblickfeldes.

Das ausbringbare Material das mittels des Sensors detektierbar ist, kann beispielsweise Dünger, Saatgut, Sand, Kies, Salz und/oder eine Mischung aus zumindest zwei Materialien sein. Darüber hinaus ist eine homogene und/oder heterogene Mischung aus wenigstens einem zumindest nahezu flüssigen und/oder festen Material, beispielsweise eine Sole, denkbar.

In einer Weiterbildung des erfindungsgemäßen Schleuderstreuers ist der zumindest eine Sensor derart angeordnet, dass das erste Messsignal im Wesentlichen senkrecht oder nahezu korrespondierend zu einer Fließrichtung des Gutstroms emmitierbar ist. Die Fließrichtung des Gutstroms entspricht hierbei zumindest teilweise der eigentlichen Förderrichtung des auszubringenden Materials. Eine vom Sensor ausgehende Achse des Sensorblickfeldes schließt hierbei einen nahezu rechten oder spitzen Winkel mit dem Gutstrom, insbesondere der Fließrichtung, ein. Unter der Achse kann hierbei eine Mittel- und/oder Rotationsachse des vom Sensor ausgehenden Blickfeldes verstanden werden. Der Sensor ist bevorzugt so angeordnet, dass der Winkel des emittierbaren ersten Messsignals zumindest teilweise dem Winkel des zurückgestrahlten und/oder empfangbaren zweiten Messsignals entspricht. Darüber hinaus ist mittels dieser Anordnung ein besonders kleiner Abstand zwischen dem ausbringbaren Material und dem zumindest einen Sensor realisierbar, womit zumindest nahezu der vollständige Gutstrom durch wenigstens einen Sensor erfassbar ist. Die Detektierung eines zumindest teilweise blockierten und/oder verstopften Gutstroms ist hierbei über die Erfassung der Gutstromausdehnung erreichbar. Ein nicht und/oder nur zumindest teilweise erfassbarer Gutstrom kann hierbei bedeuten, dass die Materialförderung zumindest teilweise blockiert und/oder verstopft ist und/oder dass der Gutstrom zumindest teilweise außerhalb des Blickfeldes des Sensors gefördert wird.

In einer bevorzugten Ausführungsform des erfindungsgemäßen Schleuderstreuers ist zumindest eine Fließbewegung, insbesondere Durchflussmenge und/oder Fließgeschwindigkeit, des Gutstroms mittels der von dem zumindest einen Sensor emittierbaren und/oder empfangbaren Messsignale bestimmbar. Die Frequenz und/oder Ausrichtung der vom Sensor emittierbaren und/oder empfangbaren Messsignale sind dabei derartig eingestellt und/oder vom geförderten Material beeinflussbar, dass eine Geschwindigkeit zumindest eines einzelnen Partikels des Materials bestimmbar ist. Über die Geschwindigkeit des zumindest einen einzelnen Partikels ist die Geschwindigkeit, insbesondere Fließgeschwindigkeit, des Gutstroms und/oder unter Einbeziehung der Materialeigenschaften die Durchflussmenge berechenbar. Die Verarbeitung der vom Sensor emittierbaren und/oder empfangbaren Messsignale und/oder die Berechnung der Geschwindigkeiten und/oder Durchflussmengen sind hierbei durch eine vom Schleuderstreuer umfassende und/oder zugeordnete Steuerungs- und/oder Regelungseinrichtung, insbesondere Auswerte- und/oder Rechnereinheit, erreichbar.

In einer anderen bevorzugten Ausführungsform des erfindungsgemäßen Schleuderstreuers ist der zumindest eine Sensor fest oder vorzugsweise lösbar zwischen der Dosiereinrichtung und der Streuscheibe, insbesondere zumindest teilweise innerhalb des Aufgabeorgans, angeordnet. Der Sensor ist in vorteilhafterweise form- und/oder kraftschlüssig mit dem Schleuderstreuer, insbesondere Aufgabeorgan, koppelbar. Somit ist eine besonders einfache Montage bzw. Demontage, beispielsweise zu Wartungs- und/oder Reinigungszwecken, des Sensors erreicht. Alternativ oder zusätzlich kann der Sensor werkzeuglos und/oder zumindest teilweise mittels einer Schraubverbindung mit dem Aufgabeorgan verbindbar sein. Insbesondere bei der Verwendung unterschiedlicher auszubringender Materialien zwischen den jeweiligen Ausbringvorgängen, ist eine besonders einfache Austauschbarkeit des zumindest einen Sensors von außerordentlicher Wichtigkeit. Somit sind besonders einfach unterschiedliche Sensoren mit zumindest teilweise abweichenden Sensoreigenschaften innerhalb des Aufgabeorgans umrüstbar und/oder verwendbar. Darüber hinaus kann das Aufgabeorgan zumindest einen Ausschnitt umfassen in den der wenigstens eine Sensor zumindest teilweise hineinragt.

Somit ist eine noch weiter verbesserte Abdeckung und/oder Abschirmung des zumindest einen Sensors, insbesondere Sensorblickfeldes, gegenüber Störeffekten erreicht.

In einer anderen Weiterbildung des erfindungsgemäßen Schleuderstreuers sind das Aufgabeorgan und die Streuscheibe zueinander verstellbar ausgebildet, wobei der Aufgabepunkt des Gutstroms, vorzugsweise konzentrisch zu einer Rotationsachse, auf der Streuscheibe anpassbar ist. Bevorzugt ist außerdem eine um das Aufgabeorgan und/oder eine zur Längsachse des Aufgabeorgans korrespondierenden Rotationsachse bewegliche Streuscheibe. Der zumindest eine Sensor ist in einer zumindest nahezu festen Position zum Aufgabeorgan und/oder der Fließrichtung des Gutstroms innerhalb des Aufgabeorgans angeordnet. Somit ist der Sensor, insbesondere das Sensorblickfeld, zumindest nahezu unabhängig vom Aufgabepunkt auf der Streuscheibe auf den Gutstrom ausgerichtet.

Beim erfindungsgemäßen Schleuderstreuer weist das Aufgabeorgan zumindest eine Zusatzöffnung auf, wobei zumindest ein weiteres Material, vorzugsweise eine Lösung aus zumindest zwei Materialien oder Stoffen, über die Zusatzöffnung in das Aufgabeorgan zuführbar ist. Bei dem zumindest einen weiteren Material kann es sich beispielweise um eine aus Wasser und Salz zusammengesetzte Sole handeln. Das Zusatzmaterial ist hierbei direkt in die zumindest eine Zusatzöffnung und/oder über eine der Zusatzöffnung zugeordneten Zuführvorrichtung zuführbar. Eine in Förderrichtung hinter der Dosiereinrichtung realisierbare Vermischung der unterschiedlichen Materialien wirkt sich besonders positiv auf den Verschmutzungsgrad der Dosiereinrichtung und damit den Wartungsaufwand und/oder Reinigungsaufwand des Schleuderstreuers aus.

Beim erfindungsgemäßen Schleuderstreuer ist die Zusatzöffnung zwischen dem Dosierorgan und dem Sensor, vorzugsweise in vertikaler Richtung über dem Sensor, angeordnet. Eine zur Zusatzöffnung bevorzugt vorgeschaltete Zuführvorrichtung für das zumindest eine weitere Material, ist hierbei vorzugsweise form- und/oder kraftschlüssig mit dem Aufgabeorgan verbindbar. Besonders bevorzugt ist eine Zuführvorrichtung die mittels wenigstens einer Schraubverbindung zumindest im Bereich des Aufgabeorgans und/oder an zumindest einer Seitenwand des Aufgabeorgans anordenbar ist. Diese ist somit im Bedarfsfall, beispielsweise bei Wartungs- und/oder Reinigungsarbeiten, besonders einfach demontierbar.

Darüber hinaus ist beim erfindungsgemäßen Schleuderstreuer der Sensor dazu eingerichtet, das zumindest eine weitere Material innerhalb des Gutstroms zu erfassen. Hierbei ist die Gutstromausdehnung und/oder Fließgeschwindigkeit und/oder Gutstrommenge des zumindest einen weiteren Materials und/oder der zumindest teilweise miteinander vermischten Materialien erfassbar. In vorteilhafterweise ist mittels des, vorzugsweise einen, Sensors eine zumindest nur teilweise Blockade und/oder Verstopfung der einzelnen zuführbaren Materialien detektierbar. Somit sind dem Bediener des Schleuderstreuers ein ordnungsgemäßer Betrieb oder eine Störung in Abhängigkeit der Materialförderung optisch und/oder akustisch signalisierbar.

Darüber hinaus ist der erfindungsgemäße Schleuderstreuer bevorzugt derartig ausgebildet, dass neben der Blockaden- und/oder Verstopfungserkennung alternativ oder zusätzlich eine Füllstandsüberwachung, insbesondere eine Leerstandsüberwachung, wenigstens eines Vorratsbehälters mittels des zumindest einen Sensors erreichbar ist. Der zumindest eine Sensor, insbesondere eine dem Sensor zugeordnete Steuerungs- und/oder Regelungseinrichtung, insbesondere Auswerteeinheit, ist hierbei dazu eingerichtet, zu erkennen ob bei einem sich verändernden Gutstrom des geförderten Materials eine Verstopfung zumindest eines Materials und/oder zumindest ein leer gelaufener Vorratsbehälter vorliegt. Somit kann der Aufbau der Sensorik innerhalb des Schleuderstreuers vereinfacht und die Kosten für den Schleuderstreuer reduziert werden.

In einer anderen bevorzugten Ausführungsform des erfindungsgemäßen Schleuderstreuers ist das Aufgabeorgan zumindest teilweise als eine von der Dosiereinrichtung zur Streuscheibe abfallende Rutsche und/oder als ein sich verjüngender Trichter ausgebildet. Ein zumindest teilweise als Rutsche ausgebildetes Aufgabeorgan weist insbesondere den Vorteil auf, dass das Material zumindest nahezu selbsttätig, vorzugsweise durch die Einwirkung der Schwerkraft, zur Streuscheibe förderbar ist. Darüber hinaus ist die Ausrichtung des Sensorblickfeldes entlang der Rutsche besonders einfach und/oder variabel realisierbar. Mittels eines sich verjüngenden Trichters ist eine besonders konzentrierte und damit genaue Aufbringung des Materials auf dem Aufgabepunkt der Streuscheibe erreichbar. Außerdem bietet der Trichter den Vorteil, dass der Sensor und/oder das Sensorblickfeld zumindest teilweise, vorzugsweise vollständig, von der Trichtergeometrie umschlossen sind. Somit ist eine nahezu störeffekt- und/oder störechofreie Detektierung des Materials und/oder Gutstroms mittels des Sensors erreichbar. Darüber hinaus ist bei dieser Ausführungsform ein Aufgabeorgan denkbar, dass eine Kombination aus einer Rutsche und einem Trichter umfasst.

Bei einer besonders bevorzugten Ausführungsform des erfindungsgemäßen Schleuderstreuers ist zumindest eine Seitenwand des Aufgabeorgans abnehmbar ausgebildet. Unter einer abnehmbaren Seitenwand kann erfindungsgemäß außerdem eine ausschwenkbare und/oder ausschiebbare Seitenwand verstanden werden. Die zumindest eine Seitenwand ist hierbei form- und/oder kraftschlüssig mit dem Schleuderstreuer und/oder zumindest einer weiteren Seitenwand des Aufgabeorgans verbindbar. Hierbei sind außerdem schnell lösbare Verbindungen wie beispielweise Schraub- und/oder Schnellspannverbindungen und/oder hierzu äquivalente Verbindungen besonders vorteilhaft. Bei einer zumindest teilweisen Verschmutzung und/oder Beeinträchtigung des Sensorblickfeldes, ist der Sensor, insbesondere das Sensorblickfeld, mittels der zumindest einen abnehmbaren Seitenwand besonders einfach und schnell erreichbar.

In einer besonders bevorzugten Weiterbildung des erfindungsgemäßen Schleuderstreuers ist das Aufgabeorgan zumindest teilweise aus einem signalundurchlässigen Material ausgebildet. Das Material des Aufgabeorgans ist hierbei zumindest teilweise aus Kunststoff und/oder Metall ausführbar. Alternativ und/oder zusätzlich sind zumindest im Bereich des Sensors und/oder des Sensorblickfeldes weitere Materialien, wie beispielsweise Keramik, denkbar. Störeffekte und/oder Beeinflussungen der Messsignale sind mittels dieser Ausführungsform nahezu ausgeschlossen. Somit sind eine noch weiter verbesserte Abschirmung des Sensorblickfeldes und damit eine besonders leistungsstarke Gutstromerfassung erreicht.

Bei einer weiteren besonders bevorzugten Ausführungsform des erfindungsgemäßen Schleuderstreuers ist der Streuscheibe zumindest ein Abdeckmittel zugeordnet, wobei das Abdeckmittel vorzugsweise aus einem signalundurchlässigen Material ausgebildet ist. Das Abdeckmittel ist hierbei vollständig oder zumindest Abschnittsweise aus dem signalundurchlässigen Material gebildet. Besonders vorteilhaft ist zumindest ein zwischen dem Sensor und der Streuscheibe angeordnetes Abdeckmittel. Somit ist der Sensor, insbesondere das Sensorblickfeld, neben den möglichen Störeffekten der Umgebung, zusätzlich gegen Störeffekte beweglicher Maschinenteile, insbesondere der Streuscheibe, durch das zumindest eine Abdeckmittel abschirmbar. Zur weiteren Steigerung der Abschirmung ist eine zumindest nahezu vollständig von wenigstens einem Abdeckmittel umschlossene Streuscheibe denkbar.

Die der Erfindung zugrunde liegende Aufgabe wird ferner durch ein Verfahren zum Erfassen eines Gutstroms innerhalb des erfindungsgemäßen Schleuderstreuers gelöst, wobei das Verfahren zumindest den folgenden Schritt umfasst:
- Auswerten des empfangenen zweiten Messsignals, vorzugsweise mittels einer dem Schleuderstreuer zugeordneten elektronischen Auswerteeinheit, mit einer FFT.

Hinsichtlich der Vorteile und Modifikationen des erfindungsgemäßen Verfahrens wird zunächst auf die Vorteile und Modifikationen des erfindungsgemäßen Schleuderstreuers verwiesen.

Basierend auf dem vom Sensor empfangenen zweiten Messsignal ist das vom Sensor an eine Steuerungs- und/oder Regelungseinrichtung, insbesondere Auswerteeinheit, abgehende Sensorsignal, insbesondere die Signalstärke, proportional zu der durch das Sensorblickfeld geförderten Menge des zumindest einen auszubringenden Materials, insbesondere Gutstroms. Ferner wird mittels einer FFT (Fast-Fourier-Transformation) ein Frequenzspektrum des zumindest einen Materials, insbesondere innerhalb des erfassten Gutstroms, bestimmt. Darüber hinaus kann durch die Zerlegung, insbesondere mittels der FFT, des vom Sensor abgegeben Signals in die jeweiligen Frequenzspektren bestimmt werden, ob zu dem zumindest einen auszubringenden Material, insbesondere Salz, zumindest ein weiteres Material, insbesondere eine Sole, durch das Sensorblickfeld gefördert wird. Somit ist neben einer einfachen Blockaden und/oder Verstopfungserkennung außerdem eine Füllstands- und/oder Behälterleerstandsüberwachung der jeweiligen Materialien realisierbar.

In einer bevorzugten Ausführungsform des erfindungsgemäßen Verfahrens wird eine, vorzugsweise optische, Information über den Gutstrom an einen Bediener ausgegeben. Die Information des Gutstroms kann hierbei zumindest eine Geschwindigkeit und/oder Menge und/oder Verfügbarkeit zumindest eines innerhalb des Gutstroms befindlichen Materials beinhalten. Darüber hinaus kann es sich hierbei um ein einfaches, vorzugsweise als farblich wahrnehmbares, Signal für einen Bediener im Bereich des Schleuderstreuers und/oder des Zugsfahrzeuges handeln. Besonders bevorzugt ist hierbei eine Ausgabe der Information auf einem mobilen Anzeigemittel das dem Schleuderstreuer und/oder dem Zugfahrzeug zugeordnet ist. Alternativ oder zusätzlich kann außerdem ein als akustisch wahrnehmbares Signal an den Bediener ausgegeben werden. Somit kann durch eine erfindungsgemäße Signalisierung eines von einem Sollzustand abweichenden und/oder eines unterbrochenen Gutstroms ein Bediener des Schleuderstreuers besonders einfach und schnell informiert werden.

Weitere Einzelheiten der Erfindung sind der Beispielsbeschreibung und den Zeichnungen zu entnehmen. Die Zeichnungen zeigen
- Fig.1: ein Ausführungsbeispiel eines erfindungsgemäßen Schleuderstreuers in einer perspektivischen Ansicht mit einem Teilschnitt; und
- Fig.2: den Schleuderstreuer und das Aufgabeorgan aus der Fig. 1 in einer detaillierten Schnittansicht.

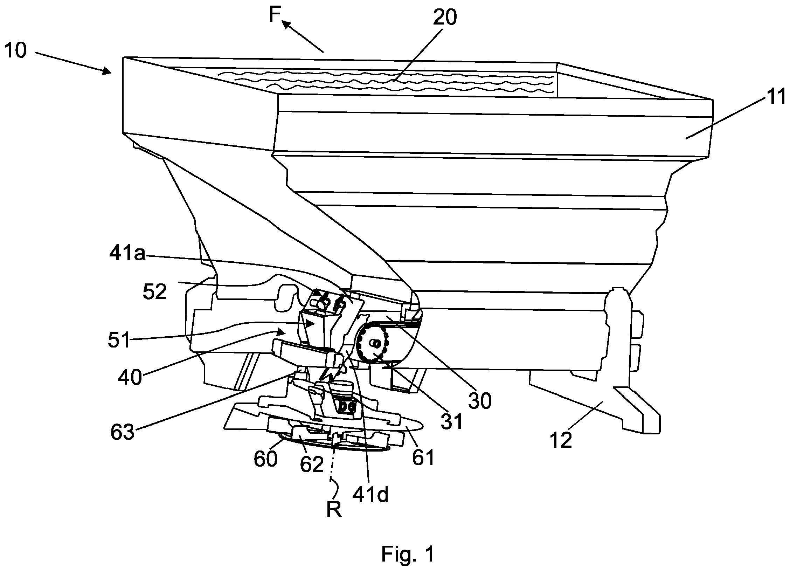

Ein Schleuderstreuer 10 zum Ausbringen von Material 20, 21, insbesondere Streugut und/oder Sole, auf einer Fahrbahn und/oder Fläche ist in der Fig. 1 gezeigt. Der Schleuderstreuer 10 ist über einen Rahmen 12 an einem nicht dargestellten Fahrzeug, insbesondere Zug- und/oder Streufahrzeug, anbaubar ausgebildet. Der Schleuderstreuer 10 umfasst neben dem Rahmen 12 einen daran befestigten zumindest abschnittsweise trichterförmig ausgebildeten Vorratsbehälter 11 zum Bevorraten des Materials 20, beispielsweise Salz und/oder Dünger.

Im unteren Bereich des Vorratsbehälters 11 ist eine als Transportband 30 ausgebildete Dosiereinrichtung angeordnet die über eine Antriebswelle 31 mit variablen Geschwindigkeiten antreibbar ist. Die Dosiereinrichtung 30 ist hierbei dazu eingerichtet, dass bevorratete Material 20 in einstellbaren Mengen aus dem Vorratsbehälter 11 an ein unterhalb der Dosiereinrichtung 30 angeordnetes zumindest teilweise trichterförmiges Aufgabeorgan 40 zu übergeben. Alternativ oder zusätzlich ist das Aufgabeorgan 40 zumindest abschnittsweise als eine abfallende Rutsche ausführbar. Darüber hinaus ist unterhalb der Dosiereinrichtung 30 auf einer in Fahrtrichtung F gesehen linken Hälfte des Schleuderstreuers 10 eine Streuscheibe 60 angeordnet. Die Streuscheibe 60 ist um eine im Wesentlichen vertikale Rotationsachse R rotatorisch antreibbar und mittels aufrecht darauf angeordneter Flügelelemente 62 dazu eingerichtet, dass zuführbare Material 20 auf einer Fahrbahn und/oder Fläche zu verteilen.

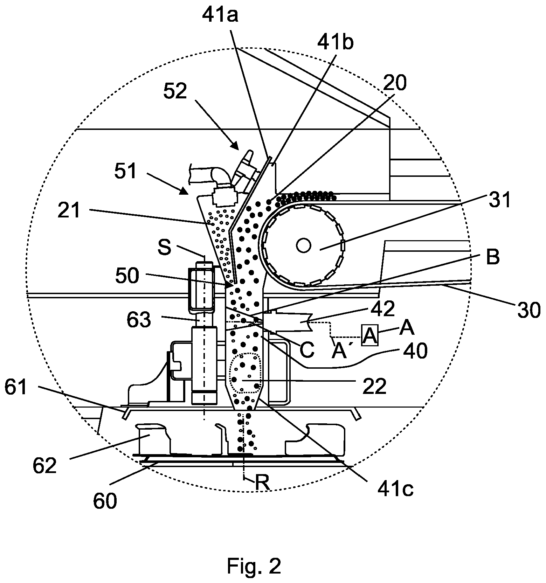

Die Fig. 2 zeigt die Förderung des Materials 20 in Form eins Gutstroms 22 durch das trichterförmige Aufgabeorgan 40 zur Streuscheibe 60, ausgehend von der Dosiereinrichtung 30. Das Aufgabeorgan 40 umfasst neben einer Zusatzöffnung 50, die an einer Seitenwand 41a-41d des Aufgabeorgans 40 angeordnet ist, außerdem eine daran angeordnete Zuführeinrichtung 51 über die ein weiteres Material 21, insbesondere eine aus mehreren Stoffen vermischte Lösung, dem Aufgabeorgan 40 und somit dem Gutstrom 22 zuführbar ist. Hiermit ist insbesondere erreicht, dass eine Zusammenführung unterschiedlich ausbringbarer Materialen 20, 21 in einem geringen Abstand zur Ausbringeinrichtung 60, insbesondere der Streuscheibe, realisierbar ist und somit Materialablagerungen unterschiedlicher Materialien 20, 21, beispielsweise auf der Dosiereinrichtung 30 und/oder des Aufgabeorgans 40, zumindest nahezu vollständig vermeidbar sind. Das über die Zuführeinrichtung 51 zuführbare Material 21 ist hierbei als zumindest nahezu homogen vermischte Sole, die aus Wasser und Salz zusammengesetzt ist, ausführbar. Die Zuführeinrichtung 51 ist mittels einer bevorzugt schnell lösbaren Schraubenverbindung 52 mit einer Seitenwand 41a-41d des Aufgabeorgans 40 verbindbar.

Das zumindest eine weitere Material 21 ist erfindungsgemäß in zumindest einem weiteren nicht gezeigten Zusatzbehälter bevorratbar. Ausgehend von dem zumindest einen weiteren Zusatzbehälter, ist das zumindest eine weitere Material 21 über zumindest eine mit der Zuführeinrichtung 51 in fluidkommunikation stehende Leitung und/oder eine zusätzliche Portionseinrichtung dem Aufgabeorgan 40 zuführbar. Alternativ oder zusätzlich ist denkbar, dass das zumindest eine weitere Material 21 innerhalb des Vorratsbehälters 11, insbesondere in einer separaten Kammer, bevorratbar ist.

Zur verbesserten Zugänglichkeit aufgrund von Wartungs- und/oder Reinigungsarbeiten innerhalb des Aufgabeorgans 40 und/oder der Zuführeinrichtung 51 ist zumindest eine der Seitenwände 41a-41d des Aufgabeorgans 40 abnehmbar ausgebildet. Alternativ oder zusätzlich zur gezeigten Ausführungsform ist auch eine zum Aufgabeorgan 40 aufschiebbare und/oder verschwenkbare Seitenwand 41a-41d denkbar.

Das zumindest eine erste über die Dosiereinrichtung 30 zuführbare Material 20 und/oder das über die Zusatzöffnung 50 zumindest eine weitere hinzufügbare Material 21 sind bevorzugt als Gutstrom 22 auf einem Aufgabepunkt auf der Streuscheibe 60 mittels des Aufgabeorgans 40 aufbringbar. Die Größe des Aufgabepunktes ist hierbei im Wesentlichen über die Geometrie, insbesondere im unteren Bereich, des Aufgabeorgans 40 anpassbar. Durch eine besonders konzentrierte und/oder kleine Ausdehnung des Gutstroms 22 sind ein kleiner Aufgabepunkt und damit eine sehr genaue Aufbringung des Gutstroms 22 auf der Streuscheibe 60 erreichbar.

Im Bereich des Aufgabeorgans 40 ist in vertikaler Richtung zwischen der Dosiereinrichtung 30 und der Streuscheibe 60, insbesondere zwischen der Zusatzöffnung 50 und der Streuscheibe 60, ein als Radarsensor 42 ausgebildeter berührungsfreier Sensor angeordnet. Der Sensor 42 ist hierbei zur weiteren Verbesserung der Zugänglichkeit lösbar mit dem Aufgabeorgan 40 verbunden, wobei alternativ auch eine feste Verbindung denkbar ist. Der Sensor 42 ist zur Erfassung der einzelnen Materialien 20, 21, insbesondere des Gutstroms 22, dazu eingerichtet, ein erstes Messsignal auf das Aufgabeorgan 40 und/oder den durch das Aufgabeorgan 40 förderbaren Gutstrom 22 zu emittieren und ein davon reflektiertes zweites Messsignal zu empfangen. Somit ist neben der Erfassung des Gutstroms 22 alternativ und/oder zusätzlich die Fließbewegung, insbesondere Durchflussmenge und/oder Fließgeschwindigkeit, des Gutstroms 22 durch ein Sensorblickfeld B des Sensors 42 bestimmbar. Das Sensorblickfeld B ist hierbei rotationssymmetrisch um eine vom Sensor 42 ausgehende Blickfeldachse C ausgebildet. Zur Verbesserung der Erfassungsleistung ist der Sensor 42 derartig angeordnet, dass die Blickfeldachse C und/oder die vom Sensor 42 ausgehenden ersten Messsignale im Wesentlichen senkrecht zur Fließrichtung des Gutstroms 22 emittierbar sind. Alternativ kann der Sensor 42 zur verbesserten Erfassung der Gutstrom- und/oder Materialgeschwindigkeit derartig angeordnet sein, dass die vom Sensor 42 ausgehenden ersten Messsignale im Wesentlichen korrespondierend zur Fließrichtung des Gutstroms 22 emittierbar sind.

Die Verarbeitung der vom Sensor 42 erfassten Signale ist hierbei mittels einer über eine Signalleitung A' mit dem Sensor 42 verbundenen Steuerungs- und/oder Regelungseinrichtung A, insbesondere Auswerteeinheit, realisiert. Die Steuerungs- und/oder Regelungseinrichtung A ist hierbei dem zumindest einen Sensor 42 zugeordnet und bevorzugt am Schleuderstreuer 10 angeordnet. Alternativ und/oder zusätzlich ist die Verbindung des Sensors 42 und somit die Verarbeitung der Messsignale mit einer dem Fahrzeug zugeordneten Steuerungs- und/oder Regelungseinrichtung A denkbar.

Die Auswertung der vom Sensor 42 über die Signalleitung A' an die Steuerungs- und/oder Regelungseinrichtung A übertragenen Signale erfolgt zumindest teilweise mit einer Fast-Fourier-Transformationen, insbesondere durch die Überwachung der Frequenzspektren. Die Steuerungs- und/oder Regelungseinrichtung A ist hierdurch dazu eingerichtet, die Verfügbarkeit und/oder geförderte Menge der jeweiligen durch den Gutstrom 22 geförderten Materialien 20, 21, insbesondere Salz und/oder Sole, zu erfassen.

Darüber hinaus ist mittels der Steuerungs- und/oder Regelungseinrichtung A und einem zusätzlichen, in den Figuren nicht gezeigten, Anzeigemittels, eine Information über den Gutstrom 22 für den Bediener ausgebbar. Die Information signalisiert dem Bediener im Bereich des Schleuderstreuers 10 und/oder des Fahrzeugs welches der auszubringenden Materialien 20, 21 innerhalb des Gutstroms 22 verfügbar ist. Somit kann der Bediener mit einer entsprechenden Information über das Anzeigemittel darauf schließen, welches der Materialien 20, 21 zu einem bestimmten Zeitpunkt, insbesondere durch das Aufgabeorgan 40, gefördert wird bzw. welches der Materialien 20, 21 zu einem bestimmten Zeitpunkt, insbesondere durch das Aufgabeorgan 40, nicht gefördert wird.

Zur weiteren Verbesserung der Erfassungsleistung des Sensors 42, ist das Aufgabeorgan 40 zumindest teilweise aus einem zumindest nahezu signalundurchlässigen Material ausgebildet. Darüber hinaus ist der Streuscheibe 60 ein aus zumindest nahezu signalundurchlässigem Material gebildetes Abdeckmittel 61 zugeordnet. Die Streuscheibe 60 ist hierbei zumindest teilweise von dem Abdeckmittel 61 umschlossen. Neben der besonders montagefreundlichen einteiligen Ausführungsform des Abdeckmittels 61 ist außerdem ein aus mehreren Teilen zusammengesetztes Abdeckmittel 61 denkbar. Durch das gezeigte Abdeckmittel 61 ist der Sensor 42, insbesondere vor Störeffekten, die sich negativ auf die vom Sensor 42 emittierbaren und/oder empfangbaren Messsignale auswirken können, aus der Umgebung des Schleuderstreuers 10 als auch vor beweglichen Teilen im Bereich des Sensorblickfeldes B, abgeschirmt.

Darüber hinaus umfasst der Schleuderstreuer 10, insbesondere die Streuscheibe 60, eine im Bereich des Aufgabeorgans 40 angeordnete und mit dem Rahmen 12 gekoppelte Schwenkwelle 63, die im Wesentlichen aufrecht ausgerichtet ist. Alternativ oder zusätzlich kann die Schwenkwelle 63 aufgrund von Bauraumeinsparung mit dem Aufgabeorgan 40 verbunden sein. Die Längsachse der Schwenkwelle 63 ist hierbei nahezu korrespondierend zur Rotationsachse R der Streuscheibe 60 ausgebildet, wobei die Streuscheibe 60 schwenkbar mit der Schwenkwelle 63 gekoppelt ist. Die Längsachse der Schwenkwelle 63 stellt hierbei gleichzeitig eine Schwenkachse S dar, um die die Streuscheibe 60 schwenkbar gelagert ist. Mittels dieser Anordnung ist die Streuscheibe 60 zum Aufgabeorgan 40 verstellbar ausgebildet, wobei somit die Aufbringung des Gutstroms 22 auf der Streuscheibe 60, insbesondere der Aufgabepunkt auf der Streuscheibe 60, konzentrisch zur Rotationsachse R anpassbar ist.

### Bezugszeichenliste

- 10: Schleuderstreuer
- 11: Vorratsbehälter
- 12: Rahmen
- 20: Ausbringbares Material, Streugut
- 21: Weiteres Material, Sole
- 22: Gutstrom
- 30: Dosiereinrichtung, Transportband
- 31: Antriebswelle
- 40: Aufgabeorgan
- 41a-41d: Seitenwand
- 42: Sensor, Radarsensor
- 50: Zusatzöffnung
- 51: Zuführeinrichtung
- 52: Schraubenverbindung
- 60: Ausbringeinrichtung, Streuscheibe
- 61: Abdeckmittel
- 62: Flügelelement
- 63: Schwenkwelle

- A: Steuerungs- und/oder Regelungseinrichtung, Auswerteeinheit
- A': Signalleitung
- B: Sensorblickfeld
- C: Blickfeldachse
- F: Fahrtrichtung
- R: Rotationsachse der Streuscheibe
- S: Schwenkachse der Streuscheibe

## Patentansprüche

1. Schleuderstreuer (10) zum Ausbringen von Material (20, 21), umfassend zumindest einen Vorratsbehälter (11) zur Bevorratung des auszubringenden Materials (20), zumindest eine einstellbare Dosiereinrichtung (30), die dem Vorratsbehälter (11) zugeordnet und dazu eingerichtet ist, dass bevorratete Material (20) aus dem Vorratsbehälter (11) zumindest einer rotatorisch antreibbaren Streuscheibe (60) zuzuführen, und zumindest ein berührungsfreier Sensor (42), der zur Erfassung des Gutstroms (22) eingerichtet ist, wobei mittels des Sensors (42) ein erstes Messsignal zumindest teilweise auf den Gutstrom (22) emittierbar und ein davon zumindest teilweise reflektiertes zweites Messsignal empfangbar ist, wobei zwischen der Dosiereinrichtung (30) und der Streuscheibe (60) zumindest ein Aufgabeorgan (40) angeordnet ist über welches das von der Dosiereinrichtung (30) zugeführte Material (20) in Form eines zumindest teilweise fließenden Gutstroms (22) auf der Streuscheibe (60) aufbringbar ist, und wobei der zumindest eine Sensor (42) im Bereich des zumindest einen Aufgabeorganes (40), zwischen der Dosiereinrichtung (30) und der Streuscheibe (60), angeordnet ist, **dadurch gekennzeichnet, dass** das Aufgabeorgan (40) zumindest eine Zusatzöffnung (50) aufweist, welche zwischen dem Dosierorgan und dem Sensor (42) angeordnet ist, und zumindest ein weiteres Material (21) über die Zusatzöffnung (50) in das Aufgabeorgan (40) zuführbar ist, wobei der Sensor (42) dazu eingerichtet ist, dass zumindest eine weitere Material (21) innerhalb des Gutstroms (22) zu erfassen.

2. Schleuderstreuer (10) nach Anspruch 1, **dadurch gekennzeichnet, dass** der zumindest eine Sensor (42) derart angeordnet ist, dass das erste Messsignal im Wesentlichen senkrecht oder nahezu korrespondierend zu einer Fließrichtung des Gutstroms (22) emmitierbar ist.

3. Schleuderstreuer (10) nach zumindest einem der vorgenannten Ansprüche, **dadurch gekennzeichnet, dass** zumindest eine Fließbewegung, insbesondere Durchflussmenge und/oder Fließgeschwindigkeit, des Gutstroms (22) mittels der von dem zumindest einen Sensor (42) emittierbaren und/oder empfangbaren Messsignale bestimmbar ist.

4. Schleuderstreuer (10) nach zumindest einem der vorgenannten Ansprüche, **dadurch gekennzeichnet, dass** der zumindest eine Sensor (42) fest oder vorzugsweise lösbar zwischen der Dosiereinrichtung (30) und der Streuscheibe (60), insbesondere zumindest teilweise innerhalb des Aufgabeorgans (40), angeordnet ist.

5. Schleuderstreuer (10) nach zumindest einem der vorgenannten Ansprüche, **dadurch gekennzeichnet, dass** das Aufgabeorgan (40) und die Streuscheibe (60) zueinander verstellbar ausgebildet sind, dass der Aufgabepunkt des Gutstroms (22), vorzugsweise konzentrisch zu einer Rotationsachse (R), auf der Streuscheibe (60) anpassbar ist.

6. Schleuderstreuer (10) nach zumindest einem der vorgenannten Ansprüche, **dadurch gekennzeichnet, dass** das zweite Messsignal mittels einer FFT (Fast-Fourier-Transformation), vorzugsweise innerhalb einer elektronischen Auswerteeinheit (A), auswertbar ist.

7. Schleuderstreuer (10) nach zumindest einem der vorgenannten Ansprüche, **dadurch gekennzeichnet, dass** das Aufgabeorgan (40) zumindest teilweise als eine von der Dosiereinrichtung (30) zur Streuscheibe (60) abfallende Rutsche und/oder als ein sich verjüngender Trichter ausgebildet ist.

8. Schleuderstreuer (10) nach zumindest einem der vorgenannten Ansprüche, **dadurch gekennzeichnet, dass** zumindest eine Seitenwand (41a-41d) des Aufgabeorgans (40) abnehmbar ausgebildet ist.

9. Schleuderstreuer (10) nach zumindest einem der vorgenannten Ansprüche, **dadurch gekennzeichnet, dass** das Aufgabeorgan (40) zumindest teilweise aus einem signalundurchlässigen Material ausgebildet ist.

10. Schleuderstreuer (10) nach zumindest einem der vorgenannten Ansprüche, **dadurch gekennzeichnet, dass** der Streuscheibe (60) zumindest ein Abdeckmittel (61) zugeordnet ist, wobei das Abdeckmittel (61) vorzugsweise aus einem signalundurchlässigen Material ausgebildet ist.

11. Verfahren zum Erfassen eines Gutstroms (22) innerhalb eines Schleuderstreuers (10) nach zumindest einem der vorstehenden Ansprüche, mit den Schritten:
- Emittieren zumindest eines ersten Messsignals auf den zumindest einen Gutstrom (22); und
- Empfangen zumindest eines von dem Gutstrom (22) reflektierten zweiten Messsignals;
**gekennzeichnet durch den Schritt:**
- Auswerten des empfangenen zweiten Messsignals, vorzugsweise mittels einer dem Schleuderstreuer (10) zugeordneten elektronischen Auswerteeinheit (A), mit einer FFT (Fast-Fourier-Transformation).

12. Verfahren nach Anspruch 11, **gekennzeichnet durch den Schritt:**
- Ausgeben einer, vorzugsweise optischen, Information über den Gutstrom (22) an einen Bediener.

## Claims

1. A centrifugal spreader (10) for distributing material (20, 21), comprising at least one storage container (11) for storing the material (20) to be distributed, at least one adjustable metering device (30) which is associated with the storage container (11) and is designed to supply stored material (20) from the storage container (11) to at least one rotationally drivable spreader disc (60), and at least one contactless sensor (42) which is designed to detect the material flow (22), wherein, by means of the sensor (42), a first measurement signal can be emitted at least partially onto the material flow (22) and a second measurement signal at least partially reflected thereby can be received, wherein at least one feed element (40) is arranged between the metering device (30) and the spreader disc (60), via which feed element the material (20) supplied by the metering device (30) can be applied to the spreader disc (60) in the form of an at least partially fluid material flow (22), and wherein the at least one sensor (42) is arranged in the region of the at least one feed element (40), between the metering device (30) and the spreader disc (60), **characterized in that** the feed element (40) has at least one additional opening (50) which is arranged between the metering element and the sensor (42), and at least one further material (21) can be supplied to the feed element (40) via the additional opening (50), wherein the sensor (42) is designed to detect at least one further material (21) within the material flow (22).

2. The centrifugal spreader (10) according to claim 1, **characterized in that** the at least one sensor (42) is arranged in such a way that the first measurement signal can be emitted substantially perpendicularly or virtually corresponding to a flow direction of the material stream (22).

3. The centrifugal spreader (10) according to at least one of the preceding claims, **characterized in that** at least one flow movement, in particular a flow rate and/or a flow velocity, of the material stream (22) can be determined by means of the measurement signals that can be emitted and/or received by the at least one sensor (42).

4. The centrifugal spreader (10) according to at least one of the preceding claims, **characterized in that** the at least one sensor (42) is arranged fixedly or preferably detachably between the metering device (30) and the spreader disc (60), in particular at least partially within the feed element (40).

5. The centrifugal spreader (10) according to at least one of the preceding claims, **characterized in that** the feed element (40) and the spreader disc (60) are designed to be adjustable relative to one another in such a way that the feed point of the material flow (22) can be adapted to the spreader disc (60), preferably concentrically to an axis of rotation (R).

6. The centrifugal spreader (10) according to at least one of the preceding claims, **characterized in that** the second measurement signal can be evaluated by means of an FFT (fast Fourier transform), preferably within an electronic evaluation unit (A).

7. The centrifugal spreader (10) according to at least one of the preceding claims, **characterized in that** the feed element (40) is designed at least partially as a chute descending from the metering device (30) to the spreader disc (60) and/or as a tapered funnel.

8. The centrifugal spreader (10) according to at least one of the preceding claims, **characterized in that** at least one side wall (41a-41d) of the feed element (40) is designed to be removable.

9. The centrifugal spreader (10) according to at least one of the preceding claims, **characterized in that** the feed element (40) is formed at least partially of a signal-impermeable material.

10. The centrifugal spreader (10) according to at least one of the preceding claims, **characterized in that** at least one covering means (61) is associated with the spreader disc (60), wherein the covering means (61) are preferably formed of a signal-impermeable material.

11. A method for detecting a material flow (22) within a centrifugal spreader (10) according to at least one of the preceding claims, comprising the steps of:
- emitting at least one first measurement signal onto the at least one material flow (22); and
- receiving at least one second measurement signal reflected by the material flow (22);
**characterized by the step of:**
- evaluating the received second measurement signal using an FFT (fast Fourier transform), preferably by means of an electronic evaluation unit (A) associated with the centrifugal spreader (10).

12. The method according to claim 11, **characterized by the step of:**
- outputting preferably optical information about the material stream (22) to an operator.

## Revendications

1. Distributeur centrifuge (10) permettant d'épandre du matériau (20, 21), comprenant au moins un réservoir de stockage (11) permettant de stocker le matériau (20) à épandre, au moins un dispositif de dosage (30) réglable qui est associé au réservoir de stockage (11) et conçu pour amener du matériau (20) stocké depuis le réservoir de stockage (11) à au moins un disque de distribution (60) pouvant être entraîné en rotation, et au moins un capteur (42) sans contact qui est configuré pour la détection du flux de matière (22), dans lequel, au moyen du capteur (42), un premier signal de mesure peut être émis au moins partiellement sur le flux de matière (22) et un second signal de mesure au moins partiellement réfléchi par ledit flux de matière peut être reçu, dans lequel au moins un organe d'alimentation (40) est disposé entre le dispositif de dosage (30) et le disque de distribution (60), par l'intermédiaire duquel organe d'alimentation le matériau (20) amené par le dispositif de dosage (30) peut être acheminé au disque de distribution (60) sous la forme d'un flux de matière (22) au moins partiellement fluide, et dans lequel l'au moins un capteur (42) est disposé dans la zone de l'au moins un organe d'alimentation (40), entre le dispositif de dosage (30) et le disque de distribution (60), **caractérisé en ce que** l'organe d'alimentation (40) présente au moins une ouverture supplémentaire (50) qui est disposée entre l'organe de dosage et le capteur (42), et au moins un autre matériau (21) peut être amené dans l'organe d'alimentation (40) par l'intermédiaire de l'ouverture supplémentaire (50), dans lequel le capteur (42) est configuré pour détecter au moins un autre matériau (21) à l'intérieur du flux de matière (22).

2. Distributeur centrifuge (10) selon la revendication 1,
**caractérisé en ce que** l'au moins un capteur (42) est disposé de telle sorte que le premier signal de mesure peut être émis sensiblement perpendiculairement ou de manière à presque correspondre à un sens d'écoulement du flux de matière (22).

3. Distributeur centrifuge (10) selon au moins l'une des revendications précédentes, **caractérisé en ce qu'**au moins un mouvement d'écoulement, en particulier le débit et/ou la vitesse d'écoulement, du flux de matière (22) peut être déterminé au moyen des signaux de mesure pouvant être émis et/ou pouvant être reçus par l'au moins un capteur (42).

4. Distributeur centrifuge (10) selon au moins l'une des revendications précédentes, **caractérisé en ce que** l'au moins un capteur (42) est disposé de manière fixe ou de préférence de manière amovible entre le dispositif de dosage (30) et le disque de distribution (60), en particulier au moins partiellement à l'intérieur de l'organe d'alimentation (40).

5. Distributeur centrifuge (10) selon au moins l'une des revendications précédentes, **caractérisé en ce que** l'organe d'alimentation (40) et le disque de distribution (60) sont réalisés de manière à pouvoir être réglés l'un par rapport à l'autre, **en ce que** le point d'alimentation du flux de matière (22) peut être adapté sur le disque de distribution (60), de préférence de manière concentrique à un axe de rotation (R).

6. Distributeur centrifuge (10) selon au moins l'une des revendications précédentes, **caractérisé en ce que** le second signal de mesure peut être évalué au moyen d'une FFT (transformée de Fourier rapide), de préférence dans une unité d'évaluation électronique (A).

7. Distributeur centrifuge (10) selon au moins l'une des revendications précédentes, **caractérisé en ce que** l'organe d'alimentation (40) est réalisé au moins partiellement en tant que goulotte inclinée depuis le dispositif de dosage (30) jusqu'au disque de distribution (60) et/ou en tant que trémie se rétrécissant.

8. Distributeur centrifuge (10) selon au moins l'une des revendications précédentes, **caractérisé en ce qu'**au moins une paroi latérale (41a-41d) de l'organe d'alimentation (40) est réalisée de manière à pouvoir être détachée.

9. Distributeur centrifuge (10) selon au moins l'une des revendications précédentes, **caractérisé en ce que** l'organe d'alimentation (40) est réalisé au moins partiellement en un matériau imperméable aux signaux.

10. Distributeur centrifuge (10) selon au moins l'une des revendications précédentes, **caractérisé en ce qu'**au moins un moyen de recouvrement (61) est associé au disque de distribution (60), dans lequel le moyen de recouvrement (61) est de préférence réalisé en un matériau imperméable aux signaux.

11. Procédé permettant de détecter un flux de matière (22) à l'intérieur d'un distributeur centrifuge (10) selon au moins l'une des revendications précédentes, comportant les étapes consistant à :
- émettre au moins un premier signal de mesure sur l'au moins un flux de matière (22) ; et
- recevoir au moins un second signal de mesure réfléchi par le flux de matière (22) ;
**caractérisé par l'étape consistant à :**
- évaluer le second signal de mesure reçu, de préférence au moyen d'une unité d'évaluation électronique (A) associée au distributeur centrifuge (10), avec une FTT (transformée de Fourier rapide).

12. Procédé selon la revendication 11, **caractérisé par** l'étape consistant à :
- transmettre des informations, de préférence optiques, concernant le flux de matière (22) à un opérateur.
